# EUROPÄISCHE PATENTSCHRIFT

(11) **EP 1 351 363 B1**
(45) Veröffentlichungstag und Bekanntmachung des Hinweises auf die Patenterteilung: **24.05.2006**
(21) Anmeldenummer: 03007080.9
(22) Anmeldetag: 28.03.2003
(51) Int. Cl.: H02G 11/00

(54) **Anordnung zur Aufhängung eines Anschlusskabels an einem fahrbaren Bodenbearbeitungsgerät**
Device for the suspension of a connecting cable on a mobile soil working apparatus
Dispositif de suspension d'un câble de raccordement sur un engin mobile destiné à travailler la terre

(30) Priorität: 05.04.2002 DE 10215062
(43) Veröffentlichungstag der Anmeldung: 08.10.2003
(73) Patentinhaber: GARDENA Manufacturing GmbH, 89079 Ulm (DE)
(72) Erfinder: Lindermeier, Wolfgang, 89617 Untermarchtal (DE)

(56) Entgegenhaltungen:
- EP-A- 0 003 549
- DE-A- 3 050 147
- US-A- 3 593 950

## Beschreibung

Die Erfindung betrifft eine Anordnung zur Aufhängung eines Anschlusskabels an einem fahrbaren Bodenbearbeitungsgerät.

Bei fahrbaren Bodenbearbeitungsgeräten mit einem elektrischen Antrieb, insbesondere Rasenmähern, besteht die Gefahr, dass ein Elektro-Anschlusskabel vom Werkzeug des Bodenbearbeitungsgeräts beschädigt wird.

Zur Vermeidung eines solchen Vorfalls ist es beispielsweise aus der DE 44 42 299 A1 bekannt, an dem Gerät und/oder ortsfest eine hohe Kabelaufhängung zu installieren, so dass das Kabel gar nicht auf den Boden zu liegen kommt. Neben dem Installationsaufwand ist aber der begrenzte Aktionsradius und die auf das Kabel wirkende hohe Zugspannung nachteilig.

Die DE 40 28 629 A1 zeigt eine Vorrichtung zum Aufrollen und Abrollen eines Kabels für einen Elektrorasenmäher mit einer Kabeltrommel mit Spiralfeder. In der DE 198 42 607 A1 ist ein an einem Griffbügel eines Rasenmähers befestigbarer bistabiler Schwenkarm für die Halterung eines Elektrokabels beschrieben.

Die DE 30 50 147 A1 zeigt eine Kabelaufhängung eines Rasenmähers, bei welcher ein Kabelhalter, an welchem das Kabel befestigt ist, verschiebbar in einen Führungsbügel eingehängt ist. Der Führungsbügel ist an dem Schiebegestänge des Mähers befestigt und im wesentlichen symmetrisch zu einer Mittelebene des Geräts. Der Bügel zeigt zwischen zwei seitlichen tieferen Endlagen einen in der Mitte leicht nach oben gewölbten Verlauf, so dass der angehängte Kabelhalter unter dem Gewicht des Kabels automatisch in eine der Endlagen gleitet und sich bei einer Änderung der Ausrichtung je nach Kabelzugspannung zur Mitte hin verschiebt, bis der höchste Punkt des gewölbten Verlaufs erreicht ist.

Der vorliegenden Erfindung liegt die Aufgabe zugrunde, eine weitere vorteilhafte Anordnung zur Aufhängung eines Anschlusskabels an einem fahrbaren Bodenbearbeitungsgerät anzugeben.

Die Erfindung ist im Patentanspruch 1 beschrieben. Die abhängigen Ansprüche enthalten vorteilhafte Ausgestaltungen und Weiterbildungen der Erfindung.

Die Verknüpfung der Schwenkbewegung des Griffbügels samt der Führung bewirkt bei einer Richtungsänderung, insbesondere einer beim bahnenweisen Arbeiten typischen Richtungsänderung um 180°, ein schnelles Umschwenken des eingehängten Kabelelements von einer stabilen Endposition in die andere, wobei die Endlagen in einer Mittenstellung des Griffbügels gegenüber bekannten Ausführungen stabiler, z.B. gegenüber einem Scheitelpunkt der Führung tiefer liegend ausgeführt sein können und/oder die Kabelzugspannung zum Verschieben des Halteelements zwischen den beiden Endlagen geringer sein kann.

Bei der Schwenkung des Griffbügels zur Änderung der Fahrtrichtung des Geräts wird die Führung mitgeschwenkt, wobei durch die Neigung der Schwenkachse gegen die Vertikale eine der beiden Endlagen der Führung angehoben wird, so dass das Verschieben des Kabelhalteelements in die andere Endlage eine geringere Zugkraft im Kabel erfordert oder ab einem bestimmten Winkel unter dem Einfluss des Kabelgewichts von selbst erfolgt.

Die Führung ist vorzugsweise ein Drahtbügel, welcher von einem Ring, einer Schlaufe usw. des Kabelhalteelements umgriffen ist.

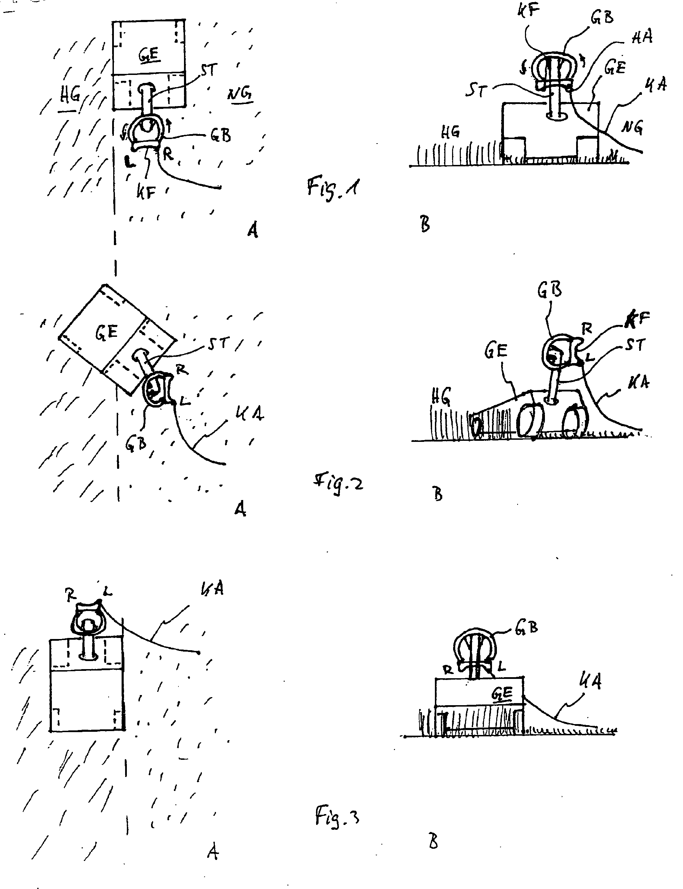

Die Erfindung ist nachfolgend anhand eines bevorzugten Ausführungsbeispiels unter Bezugnahme auf die Abbildungen noch eingehend veranschaulicht, wobei die Fig. 1 bis Fig. 3 in verschiedenen Stadien einer Richtungsänderung eine Draufsicht (A) und eine Ansicht mit horizontaler Blickrichtung (B) zeigen.

In den Figuren ist als bevorzugtes Ausführungsbeispiel ein fahrbarer Rasenmäher als Bodenbearbeitungsgerät gewählt, welcher mehrere an einem Gehäuse GE angeordnete Räder und mit dem Gehäuse GE über ein Gestänge ST verbunden einen Griffbügel GB aufweist. Eine grasbewachsene Fläche ist in den Skizzen unterteilt in einen noch nicht gemähten Teil HG mit hohem Gras und einem bereits gemähten Teil NG mit niedrigem Gras. Der Mäher kann selbstfahrend oder geschoben sein. Das Gestänge ST ist in der Weise gelenkig mit dem Mähergehäuse GE verbunden, dass es um eine Verbindungsachse zwischen Griffbügel und Mähergehäuse verschwenkbar ist. Diese Verbindungsachse ist gegen die Vertikale beispielsweise um einen Winkel von 50° geneigt und in einer Mittenstellung des Griffbügels GB für Geradeausfahrt entgegen der Fahrtrichtung nach hinten gerichtet. Die Verbindung des Gestänges mit dem Gehäuse kann insbesondere über ein an sich beliebig gestaltetes Lenkgetriebe erfolgen, welches eine Verschwenkung des Griffbügels um die beschriebene, gegen die Vertikale geneigte Schwenkachse umsetzt in eine Drehung des Mähergehäuses um eine vertikale Achse. Eine Verschwenkung des Griffbügels hat dann zur Folge, dass die Ausrichtung des Mähers, dessen Fahrtrichtung durch die Längesachse des Gehäuses bestimmt sei, geändert wird. In Fig. 2 ist eine Position gezeigt, bei welcher der Griffbügel um die Schwenkachse um ca. 90° geschwenkt ist und das Mähergehäuse hierdurch eine Richtungsänderung von ca. 45°, bezogen auf die Ausrichtung des Gestänges, ausführt.

An dem Griffbügel ist z.B. in Form eines gebogenen Drahtbügels eine Kabel-Führung KF befestigt, in welcher ein Anschlusskabel KA mittels eines Halteelements HA eingehängt ist. Die Führung KF weist in der Mittenstellung des Griffbügels nach Fig. 1 seitlich bezüglich einer Mittelebene entgegengesetzt zwei Endlagen R, L für das Halteelement HA auf, in welchen dieses unter dem Einfluss des Gewichts des Kabels eine gegenüber dem Verlauf der Führung zwischen den Endlagen stabile Positionen einnimmt. Das Kabel hängt von dem Halteelement nach unten und liegt in seinem Verlauf zu einer entfernten Steckdose auf dem Boden des gemähten Teiles NG auf.

Beim Verschwenken des Griffbügels GB in in Fig. 1 skizzierter Pfeilrichtung wird die Endlage R der Führung gegenüber dem übrigen Verlauf der Führung angehoben und der Griffbügel erreicht eine geschwenkte Position, in welcher die Endlage R für das Halteelement unter dem Einfluss der durch Gewicht und/oder Nachschleppen des Kabels bewirkten Zugkraft aus der Endlage R in Richtung der anderen Endlage L verschoben wird und schließlich entlang der Führung in diese andere Endstellung L gleitet, welche dann für das Halteelement eine neue stabile Position bildet (Fig. 2).

Nach Wenden des Mähergehäuses GE zum Mähen der nächsten Bahn befindet sich der Griffbügel für Geradeausfahrt wieder in der in Fig. 3 skizzierten Mittenstellung und das Kabel hängt von der Endlage L der Führung KF nach unten zum gemähten Teil NG der Fläche. Am Ende dieser Bahn erfolgt beim erneuten Wenden des Mähers wieder eine Schwenkung des Griffbügel in zu Fig. 2 entgegengesetzter Richtung und das Haltekabel HA wechselt entsprechend zurück in die Endlage R.

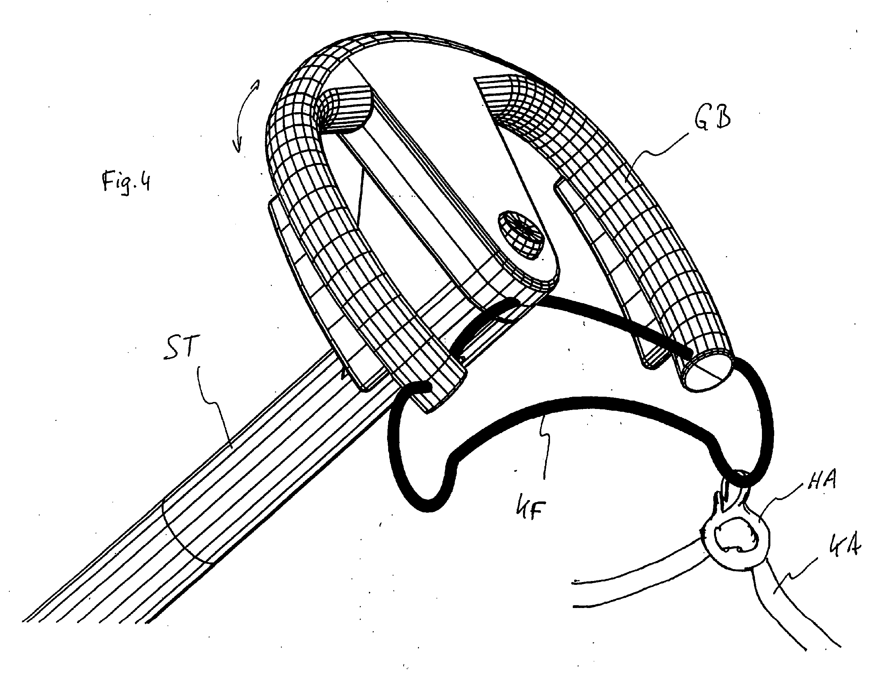

In Fig. 4 ist eine vorteilhafte Ausführungsform eines Griffbügels GB mit einer Kabel-Führung KF skizziert, in welcher mittels eines Halteelements HA ein Kabel KA seitlich verschiebbar eingehängt ist.

Die Erfindung ist nicht auf die beschriebenen Ausführungsbeispiele beschränkt, sondern im Rahmen fachmännischen Könnens in mancherlei Weise variierbar. Insbesondere ist die Form des Griffbügels einer großen Zahl von Gestaltungsvarianten zugänglich.

## Patentansprüche

1. Anordnung zur Aufhängung eines Anschlusskabels (KA) an einem fahrbaren Bodenbearbeitungsgerät mit einem elektrischen Antrieb und einem Griffbügel (GB), welcher zur Änderung der Fahrtrichtung des Geräts um eine gegen die Vertikale geneigte Schwenkachse schwenkbar ist, und mit einer mit dem schwenkbaren Griffbugel (GB) verbundenen Führung (KF) für ein in dieser Führung (KF) verschiebbares Kabel-Halteelement (HA), wobei die Führung (KF) in einer Mittenstellung zwei bezüglich einer Mittelebene des Geräts entgegengesetzte durch das Gewicht des Kabels (KA) stabile Endlagen (R, L) für das Halteelement aufweist und bei Schwenken des Bügels (GB) je nach Schwenkrichtung eine der beiden Endlagen (R, L) eine Anhebung erfährt.

2. Anordnung nach Anspruch 1, **dadurch gekennzeichnet, dass** die Führung (KF) als ein gebogener Drahtbügel ausgeführt ist.

3. Anordnung nach Anspruch 1 oder 2, **dadurch gekennzeichnet, dass** die Führung (KF) an dem Griffbügel (GB) befestigt ist.

## Claims

1. Arrangement for attaching a connection cable (KA) to a mobile ground-tending device having an electric drive and a handle (GB) which can be pivoted about a pivot axis, which is inclined with respect to the vertical, in order to change the direction of travel of the device, and having a guide (KF), which is connected to the pivotable handle (GB), for a cable-holding element (HA) which can move in this guide (KF), the guide (KF), in a central position, having two end positions (R, L) for the holding element which are opposite the centre plane of the device and are stable on account of the weight of the cable (KA), and, when the bow (GB) is pivoted, one of the two end positions (R, L) being raised depending on the pivot direction.

2. Arrangement according to Claim 1, **characterized in that** the guide (KF) is designed as a bent wire bow.

3. Arrangement according to Claim 1 or 2, **characterized in that** the guide (KF) is fixed to the handle (GB).

## Revendications

1. Agencement de suspension d'un câble de raccordement (KA) à un engin mobile destiné à travailler la terre, comprenant un entraînement électrique et un arceau de préhension (GB) qui peut pivoter pour modifier la direction de conduite de l'engin autour d'un axe de pivotement incliné par rapport à la verticale, et comprenant un guide (KF) connecté à l'arceau de préhension pivotant (GB), pour un élément de retenue de câble (HA) déplaçable dans ce guide (KF), le guide (KF) présentant, dans une position intermédiaire, deux paliers d'extrémité (R, L) pour l'élément de retenue, rendus stables par le poids du câble (KA) et opposés par rapport à un plan médian de l'appareil, et lors du pivotement de l'arceau (GB), l'un des deux paliers d'extrémité (R, L) subit un soulèvement en fonction du sens du pivotement.

2. Agencement selon la revendication 1, **caractérisé en ce que** le guide (KF) est réalisé sous la forme d'un arceau en fil métallique cintré.

3. Agencement selon la revendication 1 ou 2, **caractérisé en ce que** le guide (KF) est fixé sur l'arceau de préhension (GB).
